# EUROPEAN PATENT SPECIFICATION

(11) **EP 1 947 774 B1**
(45) Date of publication and mention of the grant of the patent: **12.05.2010**
(21) Application number: 08100494.7
(22) Date of filing: 15.01.2008
(51) Int. Cl.: H04B 1/00, H04B 7/06, H04B 7/08

(54) **Terminal and method for the simultaneous transmission of video and high-speed data**
Endgerät und Verfahren zur simultanen Übertragung von Video- und Hochgeschwindigkeitsdaten
Terminal et procédé pour la transmission simultanée de vidéo et de données à grande vitesse

(30) Priority: 22.01.2007 FR 0752808
(43) Date of publication of application: 23.07.2008
(73) Proprietor: Thomson Licensing, 92443 Issy-les-Moulineaux Cedex (FR)
(72) Inventor: Le Naour, Jean-Yves, 35740 PACE (FR); Lo Hine Tong, Dominique, 35700 RENNES (FR); Chambelin, Philippe, 35410 CHATEAUGIRON (FR)
(74) Representative: Rossmanith, Manfred

(56) References cited:
- EP-A- 1 411 587
- CN-A- 1 893 292
- US-A1- 2003 203 743
- US-A1- 2005 266 904

## Description

The present invention relates to a method for the simultaneous wireless transmission of a video stream or streams and high-speed data in a domestic environment. It also relates to a terminal for the simultaneous transmission of a video stream or streams and high-speed data. More specifically, it applies to a framework in which the IEEE 802.11 abg (Wi-Fi) WLAN standards and the emerging 802.11 n standard are implemented.

Wi-Fi technology, compliant with the IEEE 802.11abg standards and operating in the 2.4 to 2.5 GHz and 4.9 to 5.9 GHz bands, is today the best-placed technology for high-speed wireless transmissions in a domestic setting. The emerging standard 802.11 n, derived from these standards, will enable a significant increase in speed and coverage in a domestic setting in the same frequency bands. In particular, the transmission of several video streams (HD and/or SD) between for example a set top box (STB) and several terminals (PC, TVs, etc.) or a high-speed data transmission, for example for an Internet connection, will be possible. MIMO (Multiple Input Multiple Output) techniques are then implemented with several synchronous RF transmit and receive channels. The single-band MIMO transmission circuit, called a "2T*3R" circuit (two transmit paths and three receive paths), is today often retained by suppliers of user terminals to provide the interface between the circuits of the front end module (FEM) linked to the antennas and the baseband digital circuits since this approach provides a good cost/performance compromise.

In order to provide one or more video links with a good quality of service and a high-speed data link at the same time, the simultaneous use of 2.4 GHz and 5 GHz frequency bands can be considered. The most rational use is a video transmission in the 5 GHz band and a data transmission in the 2.4 GHz band since the latter is narrower and more congested. To meet these new demands, the terminal solutions conventionally adopted consist of front end modules (FEMs) linked to separate antennas and interfaced through RF circuits, i.e. RFICs (radio frequency integrated circuits), to baseband digital circuits operating in the corresponding frequency bands. The "2T*3R" MIMO techniques are often implemented for video transmission with an antenna diversity of order 3 for reception. An antenna diversity of order 2 can also advantageously be implemented in the 2.4 GHz band to improve the performance of the system. Document D1 discloses an electronic device which has a diversity type of antenna unit constituted by two transmission-receiving antennas , each adapted to different frequency bands and one dual band receive- dedicated antenna. This type of antenna unit does not permit a simultaneous dual band reception in diversity.

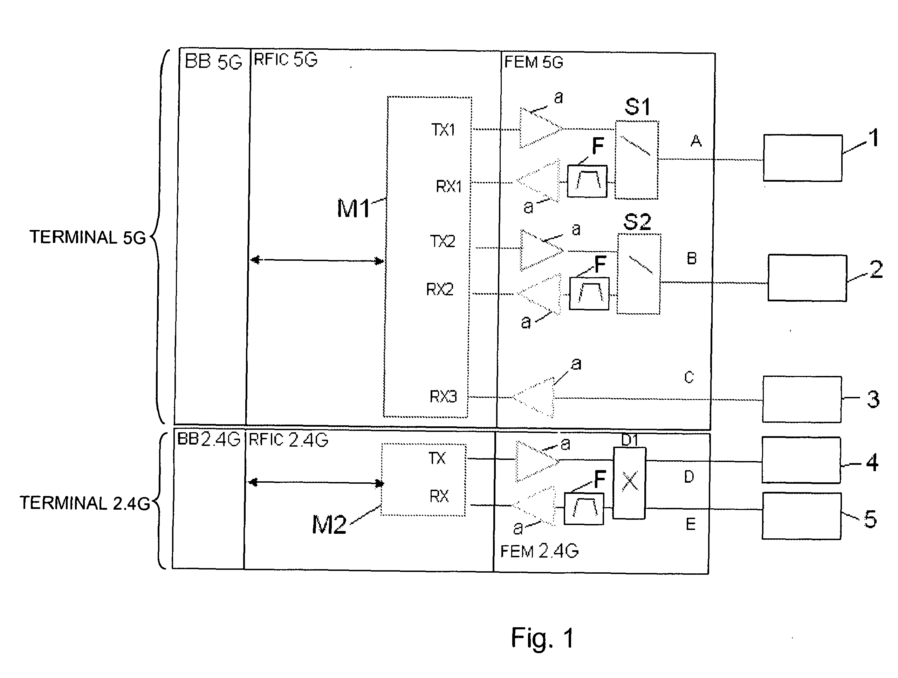

Figure 1 represents such a prior art system relating to the simultaneous transmission of video and data in a domestic environment. A terminal 5G for converting the signals received or transmitted by the antennas 1 to 3 on the paths A, B and C respectively in the 5 GHz band is placed next to a terminal 2.4G for converting the signals received or transmitted by the antennas 4 and 5 on the paths D and E respectively in the 2.4 GHz band.

The terminal 5G according to Figure 1, linked to the three antennas 1, 2 and 3 for receiving or transmitting data in the 5 GHz band, includes a front end module FEM 5G linked to a circuit RFIC 5G and to respective baseband digital processing circuits BB 5G. The front end module FEM 5G is connected to the circuit RFIC 5G forming an interface with the respective baseband digital processing circuits (BB).

The front end module FEM 5G is made up of two SPDT (Single Pole Double Throw) switches S1 and S2 for switching the paths A and B emerging from the antennas 1 and 2 as transmit paths or receive paths to the input/output points TX1, TX2, RX1 and RX2 of the MIMO circuit M1 forming the RFIC interface. In the receive paths, bandpass filters F are inserted so as to eliminate parasitic effects. The path C emerging from the antenna 3 is a receive-only path connected to the point RX3 of the MIMO circuit M1. Amplifiers, for example LNAs (Low-Noise Amplifiers), are additionally inserted in each path to adapt the signal level.

The single-band MIMO transmission circuit M1 converts the RX1, RX2 and RX3 signals received simultaneously by the three antennas into a signal transmitted to the baseband digital processing circuit BB 5G, thereby performing a receive operation with a diversity of order 3. It also converts the signals transmitted by the circuit BB 5G into signals to be transmitted, TX1, TX2, by the antennas 1 and 2, thereby performing a transmit operation with a diversity of order 2.

In parallel, the terminal 2.4G, linked to the antennas 4 and 5 for receiving and transmitting data in the 2.4 GHz band includes a front end module FEM 2.4G linked to a circuit RFIC 2.4G and to respective baseband digital processing circuits BB 2.4G for receiving or transmitting signals with a diversity of order 2. The front end module FEM 2.4G includes a DPDT (Dual Pole Dual Throw) switch D1 which converts the signals transmitted or received by the antennas 4 and 5 into a receive or transmit signal on the points TX or RX of the MIMO transmission circuit M2 of the circuit RFIC 2.4G.

With this conventional approach, a group of five separate antennas is required, which results in major problems of size and cost.

The invention aims to overcome these drawbacks.

The invention consists of a terminal in a communication system linked to a group of antennas, the terminal being made up of a front end module connected to digital processing circuits via a circuit designed for MIMO techniques, for a simultaneous dual-band reception or transmission of video signals and data in a domestic environment.
At least two antennas (7, 8) linked to the terminal are broadband and dual-access, each of the accesses corresponding to a path for receiving or transmitting signals in a first or a second frequency band.
The front end module FEM comprises first switches (S1, S2) connected to the paths (A, B, C) for receiving or transmitting signals in the first frequency band, and second switches (D1) connected to the paths (D, E) for receiving or transmitting signals in the second frequency band.
The front end module FEM also comprises selective high-pass filters in the paths for receiving or transmitting signals in the highest frequency band.

This terminal therefore includes a smaller number of components and the number of antennas is also reduced.

In another embodiment, the front end module FEM comprises selective low-pass filters in the receive paths of the lowest frequency band.
Preferably, in the 802.11 abg standard and the 802.11 n standard, the first upper frequency band and the second lower frequency band correspond to the 5 GHz and 2.4 GHz bands respectively.

The invention is also a method for selecting different frequency bands in order to simultaneously transmit or rece ive video signals and high-speed data in a communication system with a plurality of synchronous transmit and receive channels, which system includes a group of antennas linked to respective baseband digital processing circuits BB via an FEM terminal and an RFIC circuit.
The video signals and the high-speed data are transmitted or received simultaneously in two different frequency bands, a first upper frequency band and a second lower frequency band, through dual-access dual-band antennas that are isolated from one another, before being transmitted, for the signals transmitted or received in the first frequency band, to switches of the RFIC circuit in this frequency band and the video signals and the data, received or transmitted in the upper frequency band on one of the accesses of the dual-band antennas, are filtered by high-pass filters (F1, F2, F3) for the upper-frequency-band reception before being switched on to the various transmit ports (TX1, TX2) or receive ports (RX1, RX2, RX3) of a first MIMO RF transmission circuit (M1) while the video signals and the data, received or transmitted in the lower frequency band on the other of the accesses of the dual-band antennas, are switched on to the various transmit ports (TX) or receive ports (RX) of a second MIMO RF transmission circuit (M2).

Preferably, the video signals and the data, received or transmitted in the lower frequency band on the other of the accesses of the dual-band antennas, are filtered by low-pass filters (F4, F5) for the lower frequency band.

The features and advantages of the invention mentioned above, and others, will become clearer on reading the following description given with reference to the accompanying drawings in which:
- Figure 1, already described, represents a terminal according to the prior art;
- Figure 2 represents a terminal according to the invention.

Since the circuit according to the prior art has been briefly described earlier, it will not be described again hereafter. Furthermore, the same references are used for the same items in the prior art circuit and in the circuits according to the invention.

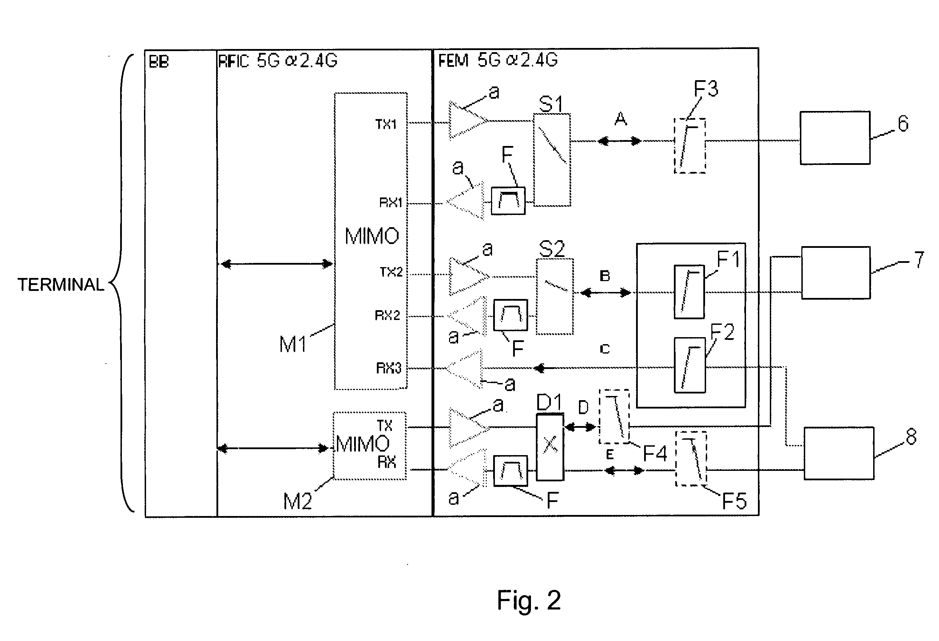

The device, according to the invention, represented by Figure 2 is made up of three antennas, two of which, 7 and 8, are dual-access broadband antennas with a particular connection to the FEM which will be detailed later. The broadband and dual-band (multi-band) antennas include two decoupled RF accesses. The device also includes a third antenna 6, used only in the 5 GHz band. This antenna can be, for example, a conventional single-band antenna with only one access. For the targeted applications in which the size and cost of the terminal are deciding factors, printed-circuit technology can be chosen for the antennas (low production cost). Several antenna topologies are documented.
Implementing such a concept requires some precautions to be taken due to the simultaneous operation of the 2.4 GHz and 5 GHz circuitry, since there is a risk of the paths D and E, operating with the 2.4 GHz signals, becoming polluted by the 5 GHz signals and vice versa. To significantly improve the performance of the user terminal, a particular RF architecture is chosen, as follows. The three antennas are arranged to maximize the isolation between paths, and this can only improve the performance of the system operating in MIMO mode (independent antennas). For example, the dual-band antennas can be positioned at two ends, while the single-band antenna is located at the centre of the antenna structure.
The 5 GHz accesses of the antennas 7 and 8, for the transmission and reception of signals in the 5 GHz band, are connected via the path B and the switch S2, or via the path C, filters F and amplifiers a to the MIMO M1 operating at 5 GHz, while the other 2.4 GHz accesses of these antennas 7 and 8, for the transmission and reception of signals in the 2.4 GHz band, are connected via the paths D and E and switch D1, filters F and amplifiers a to the MIMO M2 operating at 2.4 GHz. The two MIMO circuits are independent and can operate in parallel.
In order to reduce mutual pollution between paths, a high-pass filter F1 is implemented in the path B to prevent the 2.4 GHz transmission interfering with the 5 GHz reception. In the path C, a high-pass filter F2 is also implemented in order that the 2.4 GHz transmission does not deteriorate the 5 GHz reception. In the path A, a high-pass filter F3 can also be implemented to prevent the 5 GHz reception from being degraded by the 2.4 GHz transmission.
In the paths D and E, a low-pass filter F4, F5 is implemented to prevent the 2.4 GHz reception from being degraded by the 5 GHz transmission. If the isolation between physically distant antennas is sufficient, the filters at A and E are unnecessary. It is clear that isolation between antennas, i.e. the layout, is important. A different polarization, for example, can lead to simplifying the FEM.

The observations that can be made concerning the implementing and dimensioning of the filters F1 to F5 are indicated by way of example in the following conditions:
With a dual-access antenna isolation: 18 dB
Antenna gain: 0 dBi
Power Pout delivered to the 2.4 GHz antennas: 18 dBm
Power Pout delivered to the 5 GHz antennas: 16 dBm
Reduced noise factor at 2.4 GHz LNA input: 6 dB
Reduced noise factor at 5 GHz LNA input: 6 dB
LNA input noise floor: -168 dBm/Hz
Isolation between close antennas: 20 dB
Isolation between antennas that are the furthest apart: 30 dB
Signal bandwidth: 20 MHz
Transmission C/N signal to noise ratio: 40 dB
Reception C/N signal to noise ratio required: 20 dB
Low-pass filter rejection at 2.4 GHz: 40 dB
Low-pass filter rejection at 5 GHz: 40 dB

As regards the risk of the 5 GHz reception signals on the path A becoming polluted by the 2.4 GHz signals for a power level of the interfering signal of -42 dBm (Pin = -42 dBm), while taking into account the bandpass filtering by the filter F on the receive path of 40 dB and an isolation between physically distant antennas of 20 dB, and with a noise level corresponding to Pin noise = -82 dBm, it is to be noted that the addition of a conventional 30 dB low-pass filter F3 results in an improvement in density from -155 dBm/Hz to -185 dBm/Hz. This filter is optional if the isolation between physically distant antennas is sufficient.

As regards the risk of the 5 GHz reception signals on the path B becoming polluted by the 2.4 GHz signals for a power level of the interfering signal of -40 dBm (Pin = -40 dBm), while taking into account the bandpass filtering by the filter F on the receive path and an isolation between physically distant antennas of 30dB, and with a noise level corresponding to Pin noise = -70 dBm, it is to be noted that the addition of an additional 40 dB high-pass filter F1 is necessary. The values then become:
Pin signal = -70 dBm; Pin noise= -110 dBm; Density = -183 dBm/Hz.

As regards the risk of the 5 GHz reception on the path C becoming contaminated by the 2.4 GHz signals for a power level of the interfering signal of 0 dBm (Pin = 0 dBm), while taking into account the bandpass filtering by the filter F on the receive path and an isolation between physically distant antennas of 30dB, and with a noise level corresponding to Pin noise = -40 dBm, it is to be noted that the addition of an additional 70 dB high-pass filter F2 is necessary. The values then become:
Pin signal = -70 dBm; Pin noise = -110 dBm/Hz; Density = -183 dBm/Hz.

As regards the risk of the 2.4 GHz reception on the paths D and E becoming contaminated by the 5 GHz signals for a power level of the interfering signal of -44 dBm (Pin = -44 dBm), while taking into account the bandpass filtering by the filter F on the receive path and an isolation between physically distant antennas of 30 dB, and with a noise level corresponding to Pin noise = -44 dBm, it is to be noted that the addition of additional 30 dB low-pass filters F4 and F5 is necessary. The density values then become:
Density = -187 dBm/Hz.

These filters are optional if the isolation between physically distant antennas is sufficient.

The invention is not limited to the embodiments described and a person skilled in the art will recognize the existence of various embodiments of the invention. Indeed, if the antenna proximity constraints are different, isolation between the antennas will be important and the values of the high-pass and low-pass filters will be dependent on it.

Different MIMO transmission circuits with receive and transmit diversity can be employed.

It is thus possible to envisage a higher-order diversity for reception in the 2.4 GHz frequency band. In that case, three antennas must be dual-access dual-band antennas and the front end module is adapted to switch signals to the different MIMO transmission modules.

## Claims

1. Terminal for use in a communication system, said terminal being linked to a group of antennas, and being made up of a front end module (FEM) connected to digital processing circuits (BB) via a circuit (RFIC) designed for MIMO techniques,
**characterized in that**:
at least two antennas (7, 8) being broadband and dual-access, each of the accesses corresponds to a path (A, B, C, D, E) for receiving or transmitting signals in a first or a second frequency band, for a simultaneous dual-band reception or transmission of video signals and data in a domestic environment;
the front end module (FEM) comprises first switches (S1, S2) connected to the paths (A, B) for receiving or transmitting signals in the first frequency band, second switches (D1) connected to the paths (D, E) for receiving or transmitting signals in the second frequency band and selective high-pass filters in the paths (B, C) for receiving or transmitting signals in the highest frequency band of said first and second frequency bands.

2. Terminal according to Claim 1 **characterized in that** the front end module (FEM) comprises selective low-pass filters (F3, F4, F5) in the receive paths (A, D, E) of the lowest frequency band.

3. Terminal according to Claim 2 **characterized in that** the first upper frequency band and the second lower frequency band correspond to the 5 GHz and 2.4 GHz bands respectively.

4. Method for selecting different frequency bands in order to simultaneously transmit or receivevideo signals and high-speed data in a communication system with a plurality of synchronous transmit and receive channels, which system includes a group of antennas linked to respective baseband digital processing circuits (BB) via an FEM terminal and an RFIC circuit, which method is **characterized in that**:
the video signals and the high-speed data are transmitted or received simultaneously in two different frequency bands, a first upper frequency band and a second lower frequency band, through dual-access dual-band antennas, before being transmitted, for the signals transmitted or received in the first frequency band, to switches of the RFIC circuit in this frequency band and;
the video signals and the data, received or transmitted in the upper frequency band on one of the accesses of the dual-band antennas, are filtered by high-pass filters (F1, F2, F3) for the upper-frequency-band reception before being switched on to the various transmit ports (TX1, TX2) or receive ports (RX1, RX2, RX3) of a first MIMO RF transmission circuit (M1) while the video signals and the data, received or transmitted in the lower frequency band on the other of the accesses of the dual-band antennas, are switched on to the various transmit ports (TX) or receive ports (RX) of a second MIMO RF transmission circuit (M2).

5. Method for selecting different frequency bands in order to simultaneously transmit or receive video signals and high-speed data according to Claim 4, **characterized in that** the video signals and the data, received or transmitted in the lower frequency band on the other of the accesses of the dual-band antennas, are filtered by low-pass filters (F4, F5) for the lower frequency band.

## Patentansprüche

1. Endgerät zur Verwendung in einem Kommunikationssystem,
wobei das Endgerät mit einer Gruppe von Antennen verknüpft ist und aus einem Eingangsteilmodul (FEM) besteht, das über eine für MIMO-Techniken ausgelegte Schaltung (RFIC) mit digitalen Verarbeitungssehaltungen (BB) verbunden ist,
**dadurch gekennzeichnet, dass**
mindestens zwei Antennen (7, 8) Breitband- und Doppelzugriffsantennen sind, wobei jeder der zugriffe einem Weg (A, B, C, D, E) zum Empfangen oder Senden von Signalen in einem ersten oder in einem zweiten Frequenzband für einen simultanen Zweibandempfang oder für die Sendung von Videosignalen und Daten in einer Hausumgebung entspricht;
wobei das Eingangsteilmodul (FEM) umfasst: erste Schalter (S1, S2), die mit den Wegen (A, B) zum Empfangen oder Senden von Signalen in dem ersten Frequenzband verbunden sind, zweite Schalter (D1), die mit den Wegen (D, E) zum Empfangen oder Senden von Signalen in dem zweiten Frequenzband verbunden sind, und selektive Hochpassfilter in den Wegen (B, C) zum Empfangen oder Senden von Signalen in dem höchsten Frequenzband des ersten und des zweiten Frequenzbands.

2. Endgerät nach Anspruch 1, **dadurch gekennzeichnet, dass** das Eingangsteilmodul (FEM) in den Empfangswegen (A, D, E) des niedrigsten Frequenzbands selektive Tiefpassfilter (F3, F4, F5) umfasst.

3. Endgerät nach Anspruch 2, **dadurch gekennzeichnet, dass** das erste, obere Frequenzband und das zweite, niedrigere Frequenzband dem 5-GHz- bzw. dem 2,4-GHz-Band entsprechen.

4. Verfahren zum Auswählen unterschiedlicher Frequenzbänder, um in einem Kommunikationssystem mit mehreren synchronen Sende- und Empfangskanälen simultan Videosignale und Hochgeschwindigkeitsdaten zu senden oder zu empfangen, wobei das System eine Gruppe von Antennen enthält, die über einen FEM-Anschluss und über eine RFIC-Schaltung mit jeweiligen digitalen Basisbandverarbeitungsschaltungen (BB) verknüpft sind,
wobei das Verfahren **dadurch gekennzeichnet ist, dass** die Videosignale und die Hochgeschwindigkeitsdaten über Doppelzugriff-Zweibandantennen in zwei unterschiedlichen Frequenzbändern, einem ersten, oberen Frequenzband und einem zweiten, niedrigeren Frequenzband simultan gesendet oder empfangen werden, bevor sie für die Signale, die in dem ersten Frequenzband gesendet oder empfangen werden, zu Schaltern der RFIC-Schaltung in diesem Frequenzband gesendet werden, und
die Videosignale und die Daten, die in dem oberen Frequenzband in einem der Zugriffe der Zweibandantennen empfangen oder gesendet werden, durch Hochpassfilter (F1, F2, F3) für den Empfang des oberen Frequenzbands gefiltert werden, bevor sie auf die verschiedenen Sendeanschlüsse (TX1, TX2) oder Empfangsanschlüsse (RX1, RX2, RX3) einer ersten MIMO-RF-Sendeschaltung (M1) geschaltet werden, während die Videosignale und die Daten, die in dem unteren Frequenzband auf dem anderen der Zugänge der Zweibandantennen empfangen oder gesendet werden, auf die verschiedenen Sendeanschlüsse (TX) oder Empfangsanschlüsse (RX) einer zweiten MIMO-RF-Sendeschaltung (M2) geschaltet werden.

5. Verfahren zum Auswählen unterschiedlicher Frequenzbänder zum simultanen Senden oder Empfangen von Videosignalen und Hochgeschwindigkeitsdaten nach Anspruch 4, **dadurch gekennzeichnet, dass** die Videosignale und die Daten, die in dem unteren Frequenzband auf dem anderen der Zugänge der Zweibandantennen empfangen oder gesendet werden, durch Tiefpassfilter (F4, F5) für das niedrigere Frequenzband gefiltert werden.

## Revendications

1. Terminal pour une utilisation dans un système de communication, ledit système étant associé à un groupe d'antennes, et étant constitué d'un module frontal (FEM) connecté à des circuits de traitement numérique (BB) par un circuit (RFIC) adapté aux techniques MIMO,
**caractérisé en ce que** :
au moins deux antennes (7, 8) étant large bande et double accès, chacun des accès correspond à une voie (A, B, C, D, E) de réception ou d'émission de signaux dans une première ou une deuxième bande de fréquence pour une réception ou une transmission simultanée bi-bandes de signaux vidéo et de données dans un environnement domestique ;
le module frontal (FEM) comprend des premiers commutateurs (S1, S2) connectés aux voies (A, B) pour recevoir ou émettre des signaux dans la première bande de fréquences, des deuxièmes commutateurs (D1) connectés aux voies (D, E) pour recevoir ou émettre des signaux dans la deuxième bande de fréquences ;
et des filtres sélectifs passe haut dans les voies (B, C) pour recevoir ou émettre des signaux dans la bande de fréquence la plus haute desdites première et deuxième bandes de fréquences.

2. Terminal selon la revendication 1 **caractérisé en ce que** le module frontal (FEM) comprend des filtres sélectifs passe bas (F3, F4, F5) dans les voies de réception (A, D, E) de la bande de fréquence la plus basse.

3. Terminal selon la revendication 2 **caractérisé en ce que**, la première bande de fréquence supérieure et la deuxième bande de fréquence inférieure correspondent respectivement aux bandes 5GHz et 2.4GHz.

4. Méthode de sélection de différentes bandes de fréquence pour émettre ou recevoir simultanément des signaux vidéos et des données haut débit dans un système de communication à pluralité de chaines d'émission et de réception synchrone, lequel système comporte un groupe d'antennes associées aux circuits de traitement numérique respectifs en bande de base (BB) par l'intermédiaire d'un terminal FEM et d'un circuit RFIC, la méthode est
**caractérisée en ce que** :
les signaux vidéos et les données haut débit sont émis ou reçus simultanément dans deux bandes de fréquence différentes, une première bande de fréquence supérieure et une deuxième bande de fréquence inférieure, par des antennes bi-bandes à double accès, avant d'être transmis, pour les signaux émis ou reçus dans la première bande de fréquences, à des commutateurs du circuit RFIC dans cette bande de fréquence et ;
les signaux vidéos et les données, reçus ou émis dans la bande de fréquences supérieure sur l'un des accès des antennes bi-bandes, sont filtrés par des filtres passe haut (F1, F2, F3) pour la réception en bande de fréquence supérieure avant d'être commutés sur les différents accès émission (TX1, TX2) ou accès réception (RX1, RX2, RX3) d'un premier circuit MIMO de transmission RF (M1) alors que les signaux vidéos et les données, reçus ou émis dans la bande de fréquences inférieure sur l'autre des accès des antennes bibandes, sont commutés sur les différents accès émission (TX) ou accès réception( RX) d'un deuxième circuit MIMO de transmission RF (M2).

5. Méthode de sélection de différentes bandes de fréquence pour émettre ou recevoir simultanément des signaux vidéos et des données haut débit selon la revendication 4, **caractérisé en ce que** les signaux vidéos et les données, reçus ou émis dans la bande de fréquences inférieure sur l'autre des accès des antennes bi-bandes, sont filtrés par des filtres passe bas (F4, F5) pour la bande de fréquence inférieure.
